# EUROPEAN PATENT SPECIFICATION

(11) **EP 1 922 686 B1**
(45) Date of publication and mention of the grant of the patent: **19.12.2018**
(21) Application number: 06800913.3
(22) Date of filing: 08.08.2006
(51) Int. Cl.: H04M 3/16, G06Q 20/04, G06Q 20/10, G06Q 20/12, G06Q 20/38

(54) **METHOD AND SYSTEM FOR PERFORMING TWO FACTOR MUTUAL AUTHENTICATION**
VERFAHREN UND SYSTEM ZUM DURCHFÜHREN EINER GEGENSEITIGEN ZWEIFAKTOR-AUTHENTIFIKATION
PROCEDE ET SYSTEME PERMETTANT D'EXECUTER UNE AUTHENTIFICATION MUTUELLE A DEUX FACTEURS

(30) Priority: 11.08.2005 US 201554
(43) Date of publication of application: 21.05.2008
(73) Proprietor: Visa International Service Association, Forest City, CA 94404 (US)
(72) Inventor: LEE, Timothy, San Mateo, California 94402 (US); AABYE, Christian, Morgan Hill, CA 95037 (US); FISHER, Douglas, Mountain View, California 94040 (US)
(74) Representative: EIP
(86) International application number: PCT/US2006/030782
(87) International publication number: WO 2007/021658

(56) References cited:
- WO-A1-03/096287
- WO-A1-2005/111957
- GB-A- 2 317 983
- US-A1- 2005 131 826
- US-A1- 2005 131 826
- "AUTHENTICATING AUTOMATED TELLER MACHINES TO USERS" IBM TECHNICAL DISCLOSURE BULLETIN, INTERNATIONAL BUSINESS MACHINES CORP. (THORNWOOD), US, vol. 37, no. 6B, 1 June 1994 (1994-06-01), page 87/88, XP000455943 ISSN: 0018-8689

## Description

### BACKGROUND

Technological improvements have allowed businesses and individuals to engage in transactions in new and expanding environments. For example, computer networks, such as the Internet and/or wireless networks, have enabled the exchange of information, such as in financial transactions, to be performed using any electronic device that can communicate information over a computer network.

With respect to financial transactions, consumers appreciate the convenience of performing such transactions without having to visit a service provider directly. Accordingly, consumers can avoid the time spent driving to, for example, a retail location, a doctor's office, a bank and/or the like and the hassle associated with, for example, shopping in a retail environment or waiting in line at a bank or in a doctor's office by performing these transactions from the privacy of their own home.

Although the use of the Internet to perform transactions historically occurring in person has increased substantially, one of the primary factors hindering continued expansion is the potential security issues posed by performing such transactions in an online environment. Current systems for performing such transactions have inherent weaknesses in their security protocols. For example, such systems often use static passcodes. An unauthorized third party may obtain the static passcode by intercepting an electronic transaction and reverse engineering the transaction's data to determine the account information and the passcode contained within.

Moreover, the user may access a service provider that cannot be authenticated. For example, an Internet user intending to access a service provider's Web site may have data re-directed through, or may unintentionally directly access, an unauthorized Web site that extracts information for the purpose of subsequently committing fraud. As such, the consumer may desire to authenticate the Web site that is being accessed prior to providing sensitive or confidential information.

Accordingly, consumers and organizations have concerns regarding the possibility that a transaction performed in an online environment could permit information to be taken without the consumer's authorization. What is needed is a method and system for inhibiting unauthorized accesses to online transactions.

A need exists for a method and system that permits an online transaction to be performed securely.

A need exists for a method and system that permits a user to verify the authenticity of a particular location on the Internet such as the user's bank or desired merchant, before sending sensitive or confidential information to that location.

A further need exists for a method and system of performing two-factor mutual authentication between a user system and a host system to inhibit fraudulent access to online transactions.

The present disclosure is directed to solving one or more of the abovelisted problems.

US 2005/131826 A1 describes a centralized authorization and fraud-prevention system for network-based transactions between a customer and a merchant, wherein merchant information, transaction information and a credit card number of a customer is received at a credit card authorization system from an e-commerce merchant. WO 03/096287 discusses a dual factor authentication system utilising one-time passwords in which a token and an authentication server share secret information that can be combined with dynamic information available to both enabling the authentication server to generate the same one-time password that the token has generated and thus validate it. GB 2317983 also discusses the use of one-time passwords in a user authenticating system.

### SUMMARY

The present invention provides a system for performing a secure transaction as described in the independent claim. Preferred embodiments of the present invention are described in the dependent claims.

Before the present methods, systems and materials are described, it is to be understood that this invention is not limited to the particular methodologies, systems and materials described, as these may vary. It is also to be understood that the terminology used in the description is for the purpose of describing the particular versions or embodiments
only, and is not intended to limit the scope of the invention which will be limited only by the appended claims.

It must also be noted that as used herein and in the appended claims, the singular forms "a," "an," and "the" include plural references unless the context clearly dictates otherwise. Thus, for example, reference to a "user" is a reference to one or more of the parties or locations involved in any exchanges of value, data and/or information. Unless expressly stated otherwise, all undefined technical and scientific terms used herein have the same meanings as commonly understood by one of ordinary skill in the art, while all defined technical and scientific terms shall be deemed to include the same meaning as commonly understood by one of ordinary skill in the art with the stated definition. Although any methods, materials, and devices similar or equivalent to those described herein can be used, the preferred methods, materials, and devices are now described. All publications mentioned herein are incorporated by reference. Nothing herein is to be construed as an admission that the invention is not entitled to antedate such disclosure by virtue of prior invention.

In an example, a method for performing a secure transaction over a communication network may include receiving an account identifier and a one-time passcode from a user system via a communication network, determining whether the one-time passcode is valid, transmitting a personal assurance message to the user system via the communication network if the one-time passcode is valid. The personal assurance message is information known to the user that enables the user to verify the authenticating of the site. If the user confirms the personal assurance message, a password is received from the user system via the communication network, a determination of whether the password is valid is performed, and a secure transaction is performed if the password is valid.

In an example, a system for performing a secure transaction may include a user system, a communication network in operable communication with the user system, and a service provider system in operable communication with the communication network. The user system may transmit an account identifier and a one-time passcode to the service provider system via the communication network. The service provider system may determine whether the one-time passcode is valid and may transmit a personal assurance message to the user system via the communication network if the one-time passcode is valid. The user system may determine whether the personal assurance message is valid and may transmit a password to the service provider system via the communication network if the personal assurance message is valid. The service provider system may determine whether the password is valid. If the password is valid, the user system and the service provider system may perform a transaction via the communication network.

### BRIEF DESCRIPTION OF THE DRAWINGS

Aspects, features, benefits and advantages of the examples of the present invention will be apparent with regard to the following description, appended claims and accompanying drawings where:
FIG. 1 depicts a flow diagram of an exemplary method for performing a secure e-commerce transaction over a communication network according to an example.
FIG. 2 depicts a flow diagram of an exemplary method for performing a secure financial transaction over a communication network according to an example.
FIG. 3 depicts a flow diagram of an exemplary method for performing a secure healthcare transaction over a communication network according to an example.
FIG. 4 depicts an exemplary system for performing a secure transaction according to an example.

### DETAILED DESCRIPTION

Two-factor mutual authentication may use, for example, a one-time passcode and a personal assurance message to allow each party to a transaction to verify the other party. For example, a user may submit a one-time passcode to initiate the formation of a secure transaction connection. The passcode may be verifiable by the receiver to ensure that the user has access to a one-time passcode generator. If verified, the receiver may transmit a personal assurance message to the user. The personal assurance message may permit the user to verify that the receiver is authentic. In this manner, each party to a remote transaction may verify that the other party is identifiable.

A transaction may be, for example, any exchange of data performed with respect to e-commerce, online banking, health care provision and/or any similar data exchange. The transaction may result in the transfer of money, loyalty points and/or other units of commerce from one party to another in exchange for a corresponding good or service. Alternately, the transaction may result in the transfer of funds from one account to another account in one or more banking systems. The transaction may result in the transfer of health care information or services to a particular individual. Likewise, other transactions may result in the transfer of similar types of data, money, goods and/or services.

A transaction, such as an e-commerce, online banking, healthcare and/or other transaction, may be initiated by using, for example, account information. The account information may be an account number and/or account holder for a credit card, a debit card, a smart card, a stored value card, an ATM card, a bank account, or an insurance plan and/or any other alphanumeric identifier. The transaction may also include a one-time passcode, which may be generated by the transaction card and/or a related device.

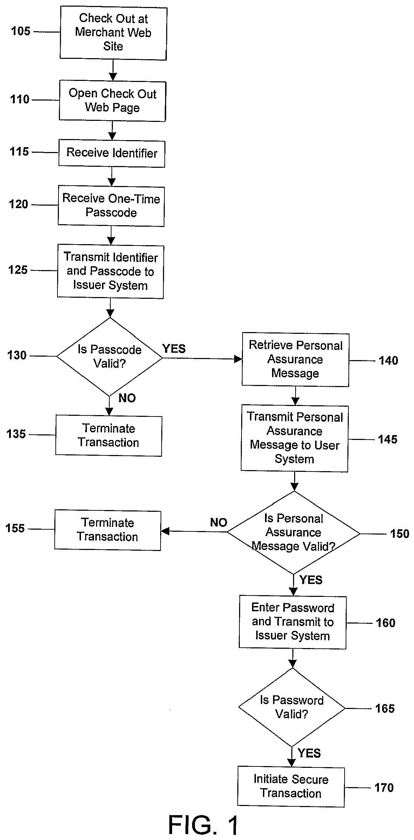

FIG. 1 depicts a flow diagram of an exemplary method for performing a secure e-commerce transaction over a communication network according to an example. Prior to the steps shown in FIG. 1, a user may browse a merchant Web site for goods and/or services. Upon selection of the goods and/or services for purchase, the user may initiate a transaction by checking out **105** at the merchant Web site. For example, the user may select a "purchase" or "checkout" button provided by the merchant Web site. Checkout may include the selection of a mode of payment by the user, a confirmation of purchased items, an identification of shipping and/or billing addresses, and/or other similar requests for information. When the user selects a transaction card as the mode of payment, a checkout web page **110,** for example, may be accessed for purposes of initiating a secure payment. Preferably, the checkout web page **110** may be controlled entirely by the issuer of the transaction card thereby allowing the user to interface directly with the issuer in order to eliminate the possibility of security breaches occurring in the exchange of data with the merchant.

At the initial checkout page, the user may be prompted to enter **115** an account number. In an example, the account number may include a credit card account number, a debit card account number, a stored value card account number, a financial account number and/or a similar account number. The account number may be, without limitation, an alphanumeric identifier denoting a particular account and/or a particular user, or any other alphanumeric identifier.

The user may also be prompted to enter **120** a one-time passcode. In an example, the one-time passcode may be generated by a one-time passcode generator, such as a powered transaction card and/or a similar device with a microprocessor capable of generating a passcode in accordance with agreed upon protocols. The one-time passcode may change on a periodic basis, such as every minute, hour or the like.

In an example, the one-time passcode may be computed using a timestamp. In an alternate example, the one-time passcode may be computed based on a number of successfully completed transactions that have previously been performed using the transaction card. Additional methods of computing the one-time passcode may also be used within the scope of this disclosure and will be apparent to those of ordinary skill in the art.

In an example, the one-time passcode may be a seemingly random alphanumeric identifier that is computed according to an algorithm implemented in the one-time passcode generator. In each such example, the one-time passcode may be generated in a manner that is known to the issuer.

In an example, the one-time passcode generator may communicate the one-time passcode to the user via an output device. For example, the one-time passcode may be displayed on a screen and/or announced through a speaker to inform the user of the one-time passcode.

The one-time passcode may be entered **120** using a user system for performing the e-commerce transaction. In an example, the user may enter the one-time passcode via a user interface. In an alternate example, the one-time passcode may be entered using electronic means, such as a data port connected to the user system. In such an example, the one-time passcode may not be displayed and/or announced to the user and/or the one-time passcode generator may not have a display and/or a speaker.

The account number and the one-time passcode may then be transmitted **125,** either together or separately, to the issuer system over a communication network. In an example, the communication network may be the Internet, an intranet, and/or the like. In an example, the transmission may be made over a secure network connection. In an alternate example, the transmission may be made over a non-secure network connection.

The one-time passcode received at the issuer system from the user will then be compared **130** to a passcode independently generated at the issuer system. The issuer may utilize substantially similar protocols for generating the issuer-generated passcode as utilized by the device. For example, the issuer system may determine the algorithm used to produce the one-time passcode based on, for example, the account number. Alternatively, the algorithm may be agreed upon in advance by the user and the issuer system. In an example, the received one-time passcode may be verified **130** by comparing it with an expected passcode value for the current time frame and one or more passcode values for previous time frames. Such an example may allow the issuer to verify **130** the received one-time passcode even if the expected value of the one-time passcode changes during the course of the transaction. If the passcode received from the user is not verified, the issuer system, for example, may terminate **135** the transaction as the user has not been authenticated to the issuer.

If the passcode received from the user is verified, the account number may be used to retrieve **140** a personal assurance message stored at the issuer system. The personal assurance message may include, for example, a digital image, a video stream, an alphanumeric sequence, a sound file, and/or the like. The user may provide the personal assurance message to the issuer prior to the transaction, such as at a time when the account is formed.

The personal assurance message may be transmitted **145** to the user system, which may permit the user to view, hear and/or otherwise comprehend the personal assurance message. The user may then determine **150** whether the personal assurance message is correct. If the personal assurance message is incorrect, the user may recognize **155** that the purchase Web site is not authentic and/or the transaction has been compromised. Accordingly, the user may terminate the transaction prior to entering sensitive or confidential information. Importantly, by terminating the transaction at this stage, the user may be protected against the fraudulent use of the user's account since the password, which permits use of the account, has not yet been entered and since the one-time passcode is not usable for future transactions.

If the personal assurance message is correct, the user may enter **160** a password, which enables the account to be used for the particular transaction. The password may be transmitted to the issuer system. The issuer system may determine **165** whether the password is valid. If the password is valid, the user system and the issuer system may initiate **170** a secure transaction utilizing the particular account.

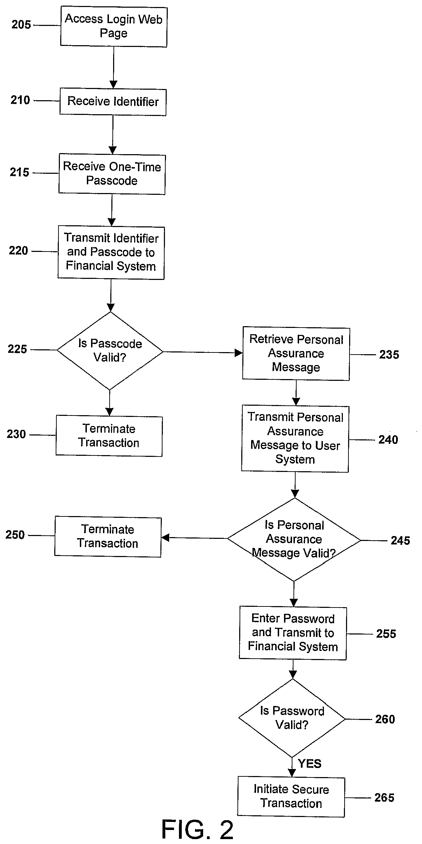

FIG. 2 depicts a flow diagram of an exemplary method for securely accessing a financial account, or other location, over a communication network according to an example. For example, an example may include a method for a user to access a financial institution's website in a manner that is both secure and that assures that the user's sensitive information is provided to the financial institution as opposed to a third party posing as the financial institution. The process may be initiated when the user accesses **205** a login Web page for the financial institution. A financial institution may include a bank, a brokerage, a security investment organization, and/or the like.

At the login web page, the user may be prompted to enter **210** an identifier. The identifier may include a user name, an account number and/or any other alphanumeric identifier.

The user may also be prompted to enter **215** a one-time passcode. In an example, the one-time passcode may be generated by a one-time passcode generator, such as a powered transaction card and/or a similar device with a microprocessor capable of generating a passcode in accordance with agreed upon protocols. The one-time passcode may change on a periodic basis, such as every minute, hour or the like.

In an example, the one-time passcode may be computed using a timestamp. In an alternate example, the one-time passcode may be computed based on a number of successfully completed transactions that have previously been performed using the transaction card. Additional methods of computing the one-time passcode may also be used within the scope of this disclosure and will be apparent to those of ordinary skill in the art.

In an example, the one-time passcode may be a seemingly random alphanumeric identifier that is computed according to an algorithm implemented in the one-time passcode generator. In each such example, the one-time passcode may be generated in a manner that is known to the financial institution.

In an example, the one-time passcode generator may communicate the one-time passcode to the user via an output device. For example, the one-time passcode may be displayed on a screen and/or announced through a speaker to inform the user of the one-time passcode.

The one-time passcode may be entered **215** using a user system for performing the transaction. In an example, the user may enter the one-time passcode via a user interface. In an alternate example, the one-time passcode may be entered using electronic means, such as a data port connected to the user system. In such an example, the one-time passcode may not be displayed and/or announced to the user and/or the one-time passcode generator may not have a display and/or a speaker.

The account number and the one-time passcode may then be transmitted **220,** either together or separately, to the financial institution system over a communication network. In an example, the communication network may be the Internet, an intranet and/or the like. In an example, the transmission may be made over a secure network connection. In an alternate example, the transmission may be made over a non-secure network connection.

The one-time passcode received at the financial institution system from the user will then be compared **225** to a passcode independently generated by the financial institution system. In independently generating the passcode, the financial institution system may utilize substantially similar protocols for generating the passcode as utilized by the user. For example, the financial institution system may determine the algorithm used to produce the one-time passcode based on, for example, the identifier. Alternatively, the algorithm may be agreed upon in advance by the user and the financial institution system. In an example, the received one-time passcode may be verified **225** by comparing it with an expected passcode value for the current time frame and one or more passcode values for previous time frames. Such an example may allow the financial institution to verify **225** the received one-time passcode even if the expected value of the one-time passcode changes during the course of the transaction. If the passcode received from the user is not verified, the financial institution system, for example, may prohibit access to the financial institution's site **230.**

If the passcode received from the user is verified, the identifier may be used to retrieve **235** a personal assurance message stored at the financial institution system. The personal assurance message may include, for example, a digital image, a video stream, an alphanumeric sequence, a sound file, and/or the like. The user may provide the personal assurance message to the financial institution prior to the transaction, such as at a time when the account is formed.

The personal assurance message may be transmitted **240** to the user system, which may permit the user to view, hear and/or otherwise comprehend the personal assurance message. The user may then determine **245** whether the personal assurance message is correct. If the personal assurance message is incorrect, the user may recognize **250** that the financial institution Web site is not authentic and/or the transaction has been compromised. Accordingly, the user may terminate the attempt to access the financial institution site prior to entering sensitive or confidential information. Importantly, by terminating the effort to access the financial institution site at this stage, the user may be protected against attempts to fraudulently obtain the needed information from the user to access the location since the user's password, which is necessary to gain such access, has not yet been entered, and since the one-time passcode is not usable for future attempts.

If the personal assurance message is correct, the user may enter **255** a password, which enables access to the user's account located on the financial institution system. The password may be transmitted to the financial institution system. The financial institution system may determine **260** whether the password is valid. If the password is valid, the user is permitted access to the financial institution system **265.**

Although described with reference to a financial institution system, a person of ordinary skill in the art will understand that the above description will be equally applicable to any other type of service provider that may require restricted or secure access to their site.

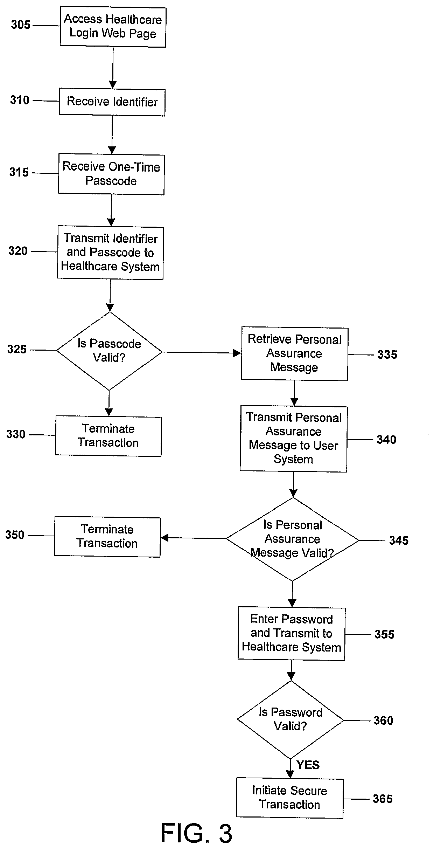

FIG. 3 depicts a flow diagram of an exemplary method for performing a secure healthcare transaction over a communication network according to an example. The user may initiate a healthcare transaction by accessing **305** a login Web page for a healthcare provider. A healthcare provider may include a doctor's office, an insurance provider, a hospital, a clinic and/or the like.

At the login page, the user may be prompted to enter **310** an identifier. The identifier may include a user name, an account number and/or any other alphanumeric identifier.

The user may also be prompted to enter **315** a one-time passcode. In an example, a one-time passcode generator, such as a powered transaction card and/or a similar device with a microprocessor capable of generating a passcode in accordance with agreed upon protocols, may determine the one-time passcode. The one-time passcode may change on a periodic basis, such as every minute, hour or the like.

In an example, the one-time passcode may be computed using a timestamp. In an alternate example, the passcode may be computed based on a number of successfully completed transactions that have previously been performed using the transaction card. Additional methods of computing the one-time passcode may also be used within the scope of this disclosure and will be apparent to those of ordinary skill in the art.

In an example, the one-time passcode may be a seemingly random alphanumeric identifier that is computed according to an algorithm implemented in the one-time passcode generator. In each such example, the passcode may be generated in a manner that is known to the healthcare provider.

In an example, the one-time passcode generator may communicate the passcode to the user via an output device. For example, the one-time passcode may be displayed on a screen and/or announced through a speaker to inform the user of the passcode.

The one-time passcode may be entered **315** using a user system for performing the healthcare transaction. In an example, the user may enter the one-time passcode via a user interface. In an alternate example, the one-time passcode may be entered using electronic means, such as a data port connected to the user system. In such an example, the one-time passcode may not be displayed and/or announced to the user and/or the one-time passcode generator may not have a display and/or a speaker.

The account number and the one-time passcode may then be transmitted **320,** either together or separately, to the healthcare provider system over a communication network. In an example, the communication network may be the Internet, an intranet and/or the like. In an example, the transmission may be made over a secure network connection. In an alternate example, the transmission may be made over a non-secure network connection.

The one-time passcode received at the healthcare provider system from the user will then be compared **325** to a passcode independently generated by the healthcare provider system. In independently generating the passcode, the healthcare provider system may utilize substantially similar protocols for generating the passcode as utilized by the user. For example, the healthcare provider system may determine the algorithm used to produce the one-time passcode based on, for example, the identifier. Alternatively, the algorithm may be agreed upon in advance by the user and the healthcare provider system. In an example, the received one-time passcode may be verified **325** by comparing it with an expected passcode value for the current time frame and one or more passcode values for previous time frames. Such an example may allow the healthcare provider to verify **325** the received one-time passcode even if the expected value of the one-time passcode changes during the course of the transaction. If the passcode is not verified, the healthcare provider system, for example, may terminate **330** the transaction.

If the passcode received from the user is verified, the identifier may be used to retrieve **335** a personal assurance message stored at the healthcare provider system. The personal assurance message may include, for example, a digital image, a video stream, an alphanumeric sequence, a sound file, and/or the like. The user may provide the personal assurance message to the healthcare provider prior to the transaction, such as at a time when the account is formed.

The personal assurance message may be transmitted **340** to the user system, which may permit the user to view, hear and/or otherwise comprehend the personal assurance message. The user may then determine **345** whether the personal assurance message is correct. If the personal assurance message is incorrect, the user may recognize **350** that the healthcare provider Web site is not authentic and/or the transaction has been compromised. Accordingly, the user may terminate the transaction prior to entering sensitive or confidential information. Importantly, by terminating the transaction at this stage, the user may be protected against attempts to fraudulently obtain the information needed to access the user's healthcare account and/or information since the user's password, which is necessary for such access, has not yet been entered and since the one-time passcode is not usable for future attempts.

If the personal assurance message is correct, the user may enter **355** a password which enables access to the healthcare provider system. The password may be transmitted to the healthcare provider system. The healthcare provider system may determine **360** whether the password is valid. If the password is valid, the user is permitted access to the healthcare provider system **365.**

Additional and alternate examples using processes similar to the ones described above may be used in a variety of settings.

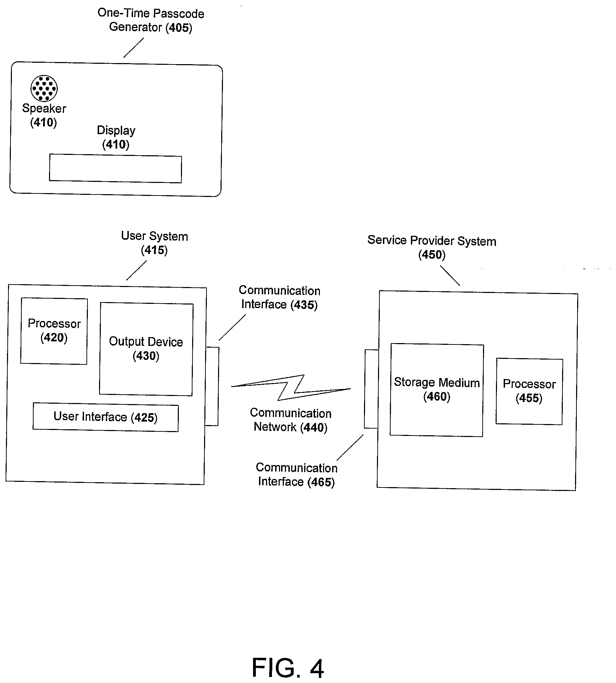

FIG. 4 depicts an exemplary system for performing a secure transaction according to an example. As shown in FIG. 4, the system may include a one-time passcode generator **405,** a user system **415,** a communication network **440,** and a service provider system **450.**

The one-time passcode generator **405** may include, for example, a transaction card having a processor that implements an algorithm for computing a passcode. The computed passcode may be unique to a particular transaction. In an example, the one-time passcode generator **405** may dynamically generate a passcode based on, for example, a timestamp and/or account information.

A passcode may alternately be retrieved from a list of one-time-use passcodes. In an example, such passcodes may be used in a particular order so that the service provider system can verify a particular passcode. Other examples are envisioned and within the scope of the present disclosure.

The one-time passcode generator **405** may provide the passcode to a user via an output device **410,** such as a display and/or a speaker. The user may then provide the passcode to the user system **415** via a user interface **425.** Alternately or additionally, the one-time passcode generator **405** may directly provide the passcode to the user system **410** via an output data port (not shown).

The user system **415** may include a processor **420,** a user interface **425,** an output device **430,** and a communication interface **435.** The user interface **425** may include a keyboard, a mouse, a trackball, an/or any other input device for providing information to the processor **420** from a user. The output device **430** may include a display, one or more speakers or the like for providing information to the user. The communication interface **435** may permit communication between the user system **415** and the communication network **440.** In an example, the user system **415** may further include an input data port (not shown) for directly receiving information from the one-time passcode generator **405.**

The communication network **440** may be a computer network, such as the Internet, an intranet and/or the like, for passing information between remote computer systems. The communication network **440** may be in operable communication with each of the user system **415** and the service provider system **450** via respective communication interfaces **435** and **465.**

The service provider system **450** may include a processor **455,** a storage medium **460,** and a communication interface **465.** The processor **455** may receive information from the communication network **440** via the communication interface **465.** The received information may include account information and a passcode received from a user system **415.** The processor **455** may compare the received passcode with an expected passcode to determine whether to authenticate the user supplying the passcode. If the user is authenticated, the processor **455** may retrieve a personal assurance message from the storage medium **460.** The processor **455** may then transmit the personal assurance message to the user system **415** via the communication network **440.**

Upon receipt, the processor **420** of the user system **415** or the user, via, for example, the user interface **425,** may use the personal assurance message to authenticate the service provider system **450.** If the service provider system **450** is authenticated, the user may enter a password into the user system **415** and begin the transaction.

## Claims

1. A system for performing a secure transaction, the system comprising:
a user system (415);
a communication network (440) in operable communication with the user system (415); and
a service provider system (450) in operable communication with the communication network (440), wherein:
the user system (415) is configured to receive a password input from a user and to transmit the password to the service provider system (450) via the communication network (440); and
the service provider system (450) determines whether the password is valid, and if the password is valid, the user system (415) and the service provider system (450) perform a transaction via the communication network (440);
**characterized in that**
the user system (415) has a connected data port to which a one-time passcode generator (405) is in communication, wherein the user system (415) receives from the connected data port a one-time passcode generated by the one-time passcode generator (405);
the user system (415) is configured to transmit an account identifier and the one-time passcode generated by the one-time passcode generator (405) to the service provider system (450) via the communication network (440);
the service provider system (450) is configured to generate a local one-time passcode independently from the one-time passcode received from the user system, wherein the service provider system is configured to utilize similar protocols for generating the local one-time passcode as utilized by the one-time passcode generator (405), and to determine whether the received one-time passcode is valid by comparing the received one-time passcode to the local one-time passcode, wherein if the received one-time passcode is valid, the service provider system (450) is configured to use the account identifier to retrieve a personal assurance message stored at the service provider system (450), having been provided to the service provider system (450) by the user prior to the transaction, and to transmit the personal assurance message to the user system (415) via the communication network (440), wherein the personal assurance message is in the form of a digital image, a video stream or a sound file;
the user system (415) is configured to, upon receipt, present the personal assurance message to the user in the form of a digital image, a video stream or a sound file for allowing the user to input the password upon a determination by the user that the presented personal assurance message corresponds to the personal assurance message provided to the service provider system by the user prior to the transaction.

2. The system of claim 1, wherein the communication network (440) comprises the Internet.

3. The system of claim 1, wherein the account identifier comprises one or more of the following:
a credit card account number;
a name of a credit card account holder;
a debit card account number;
a name of a debit card account holder;
a bank account number;
a name of a bank account holder;
a brokerage account number;
a name of a brokerage account holder;
an insurance policy number; and
a name of an insurance policy holder.

4. The system of claim 1, wherein the account identifier comprises an alphanumeric identifier.

5. The system of claim 1, wherein the one-time passcode comprises a passcode generated based on at least a timestamp.

6. The system of claim 1, wherein the one-time passcode comprises a passcode generated based on at least a number of transactions that have previously been successfully completed using the financial account identifier.

7. The system of claim 1, wherein the one-time passcode comprises a passcode generated based on an algorithm designated prior to issuing the financial account identifier to a user.

8. The system of claim 1, wherein the one-time passcode comprises a passcode that is recomputed on a periodic basis.

9. The system of claim 1, wherein the one-time passcode comprises an alphanumeric identifier.

10. The system of claim 1, wherein determining whether the password is valid comprises comparing the password to a local password corresponding to the account identifier.

## Patentansprüche

1. System zum Durchführen einer sicheren Transaktion, wobei das System umfasst:
ein Benutzersystem (415),
ein Kommunikationsnetz (440) in funktionsbereiter Kommunikation mit dem Benutzersystem (415), und
einem Dienstanbietersystem (450) in funktionsbereiter Kommunikation mit dem Kommunikationsnetz (440), wobei:
das Benutzersystem (415) ausgestaltet ist, eine Passworteingabe von einem Benutzer zu empfangen und das Passwort über das Kommunikationsnetz (440) an das Dienstanbietersystem (450) zu übermitteln, und
das Dienstanbietersystem (450) bestimmt, ob das Passwort gültig ist, und, wenn das Passwort gültig ist, das Benutzersystem (415) und das Dienstanbietersystem (450) eine Transaktion über das Kommunikationsnetz (440) durchführen,
**gekennzeichnet dadurch, dass**
das Benutzersystem (415) einen verbundenen Datenanschluss aufweist, an dem ein Einmal-Passcode-Generator (450) angeschlossen ist, wobei das Benutzersystem (415) von dem verbundenen Datenanschluss einen Einmal-Passcode empfängt, der von dem Einmal-Passcode-Generator (450) erzeugt wurde,
das Benutzersystem (415) ausgestaltet ist, einen Kontoidentifikator und den Einmal-Passcode, der von dem Einmal-Passcode-Generator (450) erzeugt wurde, über das Kommunikationsnetz (440) an das Dienstanbietersystem (450) zu übermitteln,
das Dienstanbietersystem (450) ausgestaltet ist, einen lokalen Einmal-Passcode unabhängig von dem Einmal-Passcode zu erzeugen, der von dem Benutzersystem empfangen wurde, wobei das Dienstanbietersystem ausgestaltet ist, ähnliche Protokolle zum Erzeugen des lokalen Einmal-Passcodes zu verwenden, wie die, die von dem Einmal-Passcode-Generator (405) verwendet werden, und durch Vergleichen des empfangenen Einmal-Passcodes mit dem lokalen Einmal-Passcode zu bestimmen, ob der empfangene Einmal-Passcode gültig ist, wobei, wenn der empfangene Einmal-Passcode gültig ist, das Dienstanbietersystem (450) ausgestaltet ist, den Kontoidentifikator zum Beschaffen einer persönlichen Vertrauensnachricht zu nutzen, die bei dem Dienstanbietersystem (450) gespeichert ist und dem Dienstanbietersystem (450) durch den Benutzer vor der Transaktion bereitgestellt wurde, und die persönliche Vertrauensnachricht über das Kommunikationsnetz (440) an das Benutzersystem (415) zu übermitteln, wobei die persönliche Vertrauensnachricht in der Form eines digitalen Bildes, eines Video-Streams oder einer Tondatei vorliegt,
das Benutzersystem (415) ausgestaltet ist, nach Empfang dem Benutzer die persönliche Vertrauensnachricht in Form eines digitalen Bildes, eines Video-Streams oder einer Tondatei zu präsentieren, um dem Benutzer zu ermöglichen, das Passwort nach einer Bestimmung durch den Benutzer einzugeben, dass die präsentierte persönliche Vertrauensnachricht der persönlichen Vertrauensnachricht entspricht, die dem Dienstanbietersystem durch den Benutzer vor der Transaktion bereitgestellt wurde.

2. System nach Anspruch 1, wobei das Kommunikationsnetz (440) das Internet umfasst.

3. System nach Anspruch 1, wobei der Kontoidentifikator
eine Kreditkartenkontonummer,
einen Namen eines Kreditkartenkontoinhabers,
eine Debitkartenkontonummer,
einen Namen eines Debitkartenkontoinhabers,
eine Bankkontonummer,
einen Namen eines Bankkontoinhabers,
eine Wertpapierkontonummer,
einen Namen eines Wertpapierkontoinhabers,
eine Versicherungspolicennummer und/oder
einen Namen eines Versicherungspoliceninhabers umfasst.

4. System nach Anspruch 1, wobei der Kontoidentifikator einen alphanummerischen Identifikator umfasst.

5. System nach Anspruch 1, wobei der Einmal-Passcode einen Passcode umfasst, der auf Basis wenigstens eines Zeitstempels erzeugt wird.

6. System nach Anspruch 1, wobei der Einmal-Passcode einen Passcode umfasst, der auf Basis wenigstens einer Zahl von Transaktionen erzeugt wird, die zuvor erfolgreich unter Verwendung des Finanzkontoidentifikators ausgeführt wurden.

7. System nach Anspruch 1, wobei der Einmal-Passcode einen Passcode umfasst, der auf Basis eines Algorithmus erzeugt wird, der vor dem Ausgeben des Finanzkontoidentifikators an einen Benutzer bestimmt wird.

8. System nach Anspruch 1, wobei der Einmal-Passcode einen Passcode umfasst, der auf einer periodischen Basis neuberechnet wird.

9. System nach Anspruch 1, wobei der Einmal-Passcode einen alphanummerischen Identifikator umfasst.

10. System nach Anspruch 1, wobei das Bestimmen, ob das Passwort gültig ist, ein Vergleichen des Passworts mit einem lokalen Passwort umfasst, das dem Kontoidentifikator entspricht.

## Revendications

1. Système permettant de réaliser une transaction sécurisée, le système comprenant :
un système utilisateur (415) ;
un réseau de communication (440) en communication avec le système utilisateur (415) ; et
un système de fournisseur de services (450) en communication avec le réseau de communication (440) ; dans lequel :
le système utilisateur (415) est configuré pour recevoir un mot de passe saisi par un utilisateur et pour transmettre le mot de passe au système de fournisseur de services (450) à l'aide du réseau de communication (440) ; et
le système de fournisseur de services (450) détermine si le mot de passe est valide, et, si le mot de passe est valide, le système utilisateur (415) et le système de fournisseur de services (450) effectuent une transaction à l'aide du réseau de communication (440) ;
**caractérisé en ce que**
le système utilisateur (415) possède un port de données connecté avec lequel un générateur de code à usage unique (405) est en communication, dans lequel le système utilisateur (415) reçoit de la part du port de données connecté un code à usage unique généré par le générateur de code à usage unique (405) ;
le système utilisateur (415) est configuré pour transmettre un identifiant de compte et le code à usage unique généré par le générateur de code à usage unique (405) au système de fournisseur de services (450) via le réseau de communication (440) ;
le système de fournisseur de services (450) est configuré pour générer un code à usage unique local indépendant du code à usage unique reçu de la part du système utilisateur, dans lequel le système de fournisseur de services est configuré pour utiliser des protocoles similaires afin de générer le code à usage unique local utilisé par le générateur de code à usage unique (405), et pour déterminer si le code à usage unique reçu est valide en comparant le code à usage unique reçu avec le code à usage unique local, dans lequel, si le code à usage unique reçu est valide, le système de fournisseur de services (450) est configuré pour utiliser l'identifiant de compte afin de récupérer un message de garantie personnelle stocké au niveau du système de fournisseur de services (450), qui a été fourni par le système de fournisseur de services (450) par l'utilisateur avant la transaction, et pour transmettre le message de garantie personnelle au système utilisateur (415) via le réseau de communication (440), dans lequel le message de garantie personnelle se présente sous la forme d'une image numérique, d'un flux de données vidéo ou d'un fichier de son ;
le système utilisateur (415) est configuré pour, dès sa réception, présenter le message de garantie personnelle à l'utilisateur sous la forme d'une image numérique, d'un flux de données vidéo ou d'un fichier de son afin de permettre à l'utilisateur de saisir le mot de passe lorsqu'il est déterminé par l'utilisateur que le message de garantie personnelle présenté correspond au message de garantie personnelle fourni au système de fournisseur de services par l'utilisateur avant la transaction.

2. Système selon la revendication 1, dans lequel le réseau de communication (440) comprend Internet.

3. Système selon la revendication 1, dans lequel l'identifiant de compte comprend un ou plusieurs des éléments suivants :
un numéro de compte de carte de crédit ;
un nom d'un titulaire de compte de carte de crédit;
un numéro de compte de carte de débit;
un nom d'un titulaire de compte de carte de débit ;
un numéro de compte bancaire ;
un nom d'un titulaire de compte bancaire ;
un numéro de compte de courtage ;
un nom d'un titulaire de compte de courtage ;
un numéro de police d'assurance ; et
un nom d'un titulaire de police d'assurance.

4. Système selon la revendication 1, dans lequel l'identifiant de compte comprend un identifiant alphanumérique.

5. Système selon la revendication 1, dans lequel le code à usage unique comprend un code généré sur la base d'au moins un horodatage.

6. Système selon la revendication 1, dans lequel le code à usage unique comprend un code généré sur la base d'au moins un nombre de transactions qui ont été précédemment effectuées avec succès à l'aide de l'identifiant de compte financier.

7. Système selon la revendication 1, dans lequel le code à usage unique comprend un code généré sur la base d'un algorithme désigné avant de transmettre l'identifiant de compte financier à un utilisateur.

8. Système selon la revendication 1, dans lequel le code à usage unique comprend un code qui est recalculé périodiquement.

9. Système selon la revendication 1, dans lequel le code à usage unique comprend un identifiant alphanumérique.

10. Système selon la revendication 1, dans lequel la détermination du fait que le mot de passe soit valide ou non comprend une comparaison du mot de passe avec un mot de passe local qui correspond à l'identifiant de compte.
